# FASCICULE DE BREVET EUROPEEN

(11) **EP 3 328 735 B1**
(45) Date de publication et mention de la délivrance du brevet: **01.04.2020**
(21) Numéro de dépôt: 16747542.5
(22) Date de dépôt: 12.07.2016
(51) Int. Cl.: B64D 1/04, B64D 7/08

(54) **DISPOSITIF DE GUIDAGE POUR EJECTEUR**
AUSWERFERFÜHRUNGSVORRICHTUNG
EJECTOR GUIDE DEVICE

(30) Priorité: 29.07.2015 FR 1557251
(43) Date de publication de la demande: 06.06.2018
(73) Titulaire: Alkan, 94460 Valenton (FR)
(72) Inventeur: GUARALDO, Denis, 78140 Velizy (FR)
(74) Mandataire: Cabinet Netter
(86) Numéro de dépôt international: PCT/FR2016/051797
(87) Numéro de publication internationale: WO 2017/017335

(56) Documents cités:
- EP-A1- 1 253 076
- GB-A- 784 930
- US-A- 3 006 253
- US-A- 4 600 171

## Description

La présente invention concerne un éjecteur pour une charge emportée sous un aéronef. Un tel éjecteur est apte à maintenir la charge au moyen de moyens de fixation et à mobiliser la charge depuis une position interne, où la charge est typiquement à l'intérieur d'une soute située dans la cellule de l'aéronef, jusqu'à une position externe où la charge est à l'extérieur de la cellule de l'aéronef. Lorsque la charge est en position externe, l'éjecteur doit être apte à supporter les efforts aérodynamiques subits par la charge. Un tel éjecteur est encore apte à éjecter la charge, préférentiellement depuis la position externe, en libérant tous les moyens de fixation de la charge à l'éjecteur.

Afin de réaliser la mobilisation de la charge, un éjecteur comprend avantageusement un moyen de guidage de la charge, disposé entre l'aéronef et la charge, apte à guider la charge entre la position interne et la position externe.

Il est connu de réaliser un moyen de guidage comportant une glissière. Cependant un tel dispositif est de manière préjudiciable susceptible de se bloquer en cours de déplacement, notamment du fait des efforts aérodynamiques transverses à la direction de guidage. Aussi est-il recherché un autre modèle de moyen de guidage non sujet à cet inconvénient.

US 3006253 divulgue un éjecteur pour charge aéroportée comprenant un moyen de guidage de la charge en translation. Selon un mode de réalisation, le moyen de guidage comprend un système de doubles bielles passives. Le réglage de la position de l'éjecteur est réalisé par un vérin.

EP 1253076 divulgue un éjecteur pour missile aéroporté. Il comprend deux bielles simples conférant au missile un mouvement circulaire.

US 4600171 divulgue un éjecteur pour munition aéroportée. Il comprend de manière similaire deux bielles simples conférant à la charge un mouvement circulaire.

GB 784930 divulgue un éjecteur pour munition aéroportée. Il comprend de manière similaire deux bielles simples conférant à la charge un mouvement circulaire.

Un but de la présente invention est de proposer un éjecteur pour charge emportée sous un aéronef, comprenant un moyen de guidage de la charge, disposé entre l'aéronef et la charge, et apte à guider la charge parallèlement à elle-même, sensiblement selon un mouvement de translation, ledit moyen de guidage comprenant : une première bielle supérieure, une première bielle inférieure, la première bielle supérieure étant articulée avec l'aéronef par une de ses extrémités au niveau d'une première articulation supérieure, et avec une des extrémités de la première bielle inférieure par l'autre de ses extrémités au niveau d'une première articulation médiane, la première bielle inférieure étant articulée avec la charge par l'autre de ses extrémités au niveau d'une première articulation inférieure, les axes des trois premières articulations étant parallèles, une deuxième bielle supérieure, une deuxième bielle inférieure, la deuxième bielle supérieure étant articulée avec l'aéronef par une de ses extrémités au niveau d'une deuxième articulation supérieure, et avec une des extrémités de la deuxième bielle inférieure par l'autre de ses extrémités au niveau d'une deuxième articulation médiane, la deuxième bielle inférieure étant articulée avec la charge par l'autre de ses extrémités au niveau d'une deuxième articulation inférieure, les axes des trois deuxièmes articulations étant parallèles, la longueur cumulée de la deuxième bielle supérieure et de la deuxième bielle inférieure étant égale à la longueur cumulée de la première bielle supérieure et de la première bielle inférieure, et un moyen de synchronisation apte à recopier, en lui appliquant un premier gain, l'angle de la première articulation supérieure sur l'angle de la première articulation médiane, apte à recopier, en lui appliquant un deuxième gain, l'angle de la deuxième articulation supérieure sur l'angle de la deuxième articulation médiane et apte à recopier, en lui appliquant un cinquième gain, l'angle de la première articulation supérieure sur l'angle de la deuxième articulation supérieure, le moyen de synchronisation comprenant encore une première prise de mouvement supérieure, disposée au niveau de la première articulation supérieure et apte à tourner selon l'angle de la première articulation supérieure, une première prise de mouvement médiane supérieure, disposée au niveau de la première articulation médiane apte à tourner selon l'angle de la première articulation médiane et solidaire en rotation de la première bielle inférieure, un premier moyen de transmission rotatif supérieur entre la première prise de mouvement supérieure et la première prise de mouvement médiane supérieure, comportant un moyen multiplicateur selon le premier gain, une deuxième prise de mouvement supérieure, disposée au niveau de la deuxième articulation supérieure et apte à tourner selon l'angle de la deuxième articulation supérieure, une deuxième prise de mouvement médiane supérieure, disposée au niveau de la deuxième articulation médiane apte à tourner selon l'angle de la deuxième articulation médiane et solidaire en rotation de la deuxième bielle inférieure, un deuxième moyen de transmission rotatif supérieur entre la deuxième prise de mouvement supérieure et la deuxième prise de mouvement médiane supérieure, comportant un moyen multiplicateur selon le deuxième gain, un moyen de transmission rotatif transverse supérieur entre la première prise de mouvement supérieure et la deuxième prise de mouvement supérieure, comportant un moyen multiplicateur selon le cinquième gain,
et/ou le moyen de synchronisation comprenant encore : une première prise de mouvement inférieure, disposée au niveau de la première articulation inférieure et apte à tourner selon l'angle de la première articulation inférieure, une première prise de mouvement médiane inférieure, disposée au niveau de la première articulation médiane apte à tourner selon l'angle de la première articulation médiane et solidaire en rotation de la première bielle supérieure, un premier moyen de transmission rotatif inférieur entre la première prise de mouvement inférieure et la première prise de mouvement médiane supérieure, comportant un moyen multiplicateur selon le troisième gain, une deuxième prise de mouvement inférieure, disposée au niveau de la deuxième articulation inférieure et apte à tourner selon l'angle de la deuxième articulation inférieure, une deuxième prise de mouvement médiane inférieure, disposée au niveau de la deuxième articulation médiane apte à tourner selon l'angle de la deuxième articulation médiane et solidaire en rotation de la deuxième bielle supérieure, un deuxième moyen de transmission rotatif inférieur entre la deuxième prise de mouvement inférieure et la deuxième prise de mouvement médiane inférieure, comportant un moyen multiplicateur selon le quatrième gain, un moyen de transmission rotatif transverse inférieur entre la première prise de mouvement inférieure et la deuxième prise de mouvement inférieure, comportant un moyen multiplicateur selon le sixième gain.

Selon une autre caractéristique, la longueur de la première bielle supérieure est égale à la longueur de la deuxième bielle supérieure.

Selon une autre caractéristique, la longueur de la première bielle supérieure est égale à la longueur de la deuxième bielle inférieure.

Selon une autre caractéristique, la longueur de la première bielle supérieure est égale à la longueur de la première bielle inférieure, et la longueur de la deuxième bielle supérieure est égale à la longueur de la deuxième bielle inférieure.

Selon une autre caractéristique, le moyen de synchronisation est encore apte à recopier, en lui appliquant un troisième gain, l'angle de la première articulation inférieure sur l'angle de la première articulation médiane, apte à recopier, en lui appliquant un quatrième gain, l'angle de la deuxième articulation inférieure, sur l'angle de la deuxième articulation médiane, et apte à recopier, en lui appliquant un sixième gain, l'angle de la première articulation inférieure, sur l'angle de la deuxième articulation inférieure.

Selon une autre caractéristique, la première prise de mouvement supérieure est solidaire en rotation de l'aéronef et le premier gain est égal à 2 ou la première prise de mouvement supérieure est solidaire en rotation de la première bielle supérieure et le premier gain est égal à -2, la deuxième prise de mouvement supérieure est solidaire en rotation de l'aéronef et le deuxième gain est égal à 2 ou la deuxième prise de mouvement supérieure est solidaire en rotation de la deuxième bielle supérieure et le deuxième gain est égal à -2, la première prise de mouvement inférieure est solidaire en rotation de la charge et le troisième gain est égal à 2 ou la première prise de mouvement inférieure est solidaire en rotation de la première bielle inférieure et le troisième gain est égal à -2, la deuxième prise de mouvement inférieure est solidaire en rotation de la charge et le quatrième gain est égal à 2 ou la deuxième prise de mouvement inférieure est solidaire en rotation de la deuxième bielle inférieure et le quatrième gain est égal à -2, un moyen de transmission comprend un moyen doubleur pour réaliser un gain de 2, et un moyen doubleur et un moyen inverseur pour réaliser un gain de -2, et le cinquième gain, respectivement le sixième gain, est égal à +/-1.

Selon une autre caractéristique, au moins un premier ensemble de bielles comprenant la première bielle supérieure et la première bielle inférieure est disposé d'un premier côté de la charge, et au moins un deuxième ensemble de bielles comprenant la deuxième bielle supérieure et la deuxième bielle inférieure est disposé d'un deuxième côté de la charge, sensiblement opposé au premier côté.

Selon une autre caractéristique, un premier ensemble de bielles est disposé symétriquement relativement à un deuxième ensemble de bielles et le cinquième gain et/ou le sixième gain est égal à -1.

Selon une autre caractéristique, au moins un ensemble de bielles est disposé de manière à ce que l'articulation médiane soit généralement plus éloignée de la charge que l'articulation supérieure et que l'articulation inférieure, selon une direction comprise dans un plan horizontal de l'aéronef.

Selon une autre caractéristique, une prise de mouvement comprend une poulie adaptée au moyen de transmission, un moyen de transmission comprend une courroie, préférentiellement crantée, une chaîne, ou un câble, disposée entre les deux prises de mouvement associées, un moyen inverseur comprend un croisement du moyen de transmission, et un moyen doubleur comprend la première prise de mouvement présentant un diamètre double du diamètre de la deuxième prise de mouvement associée.

Selon une autre caractéristique, une prise de mouvement comprend une roue dentée, un moyen de transmission comprend au moins zéro roue dentée successivement engrenée entre les deux prises de mouvement associées, un moyen inverseur comprend un nombre impair d'engrènements entre les deux prises de mouvement associées, et un moyen doubleur comprend un rapport de réduction de deux entre la première prise de mouvement et la deuxième prise de mouvement associées.

Selon une autre caractéristique, l'une au moins des prises de mouvement est encore solidaire en rotation d'un frein.

Selon une autre caractéristique, l'une au moins des prises de mouvement est encore solidaire en rotation d'un moyen de rappel.

Selon une autre caractéristique, l'une au moins des prises de mouvement est encore solidaire en rotation d'un moteur.

L'invention va maintenant être décrite plus en détail en référence à des modes de réalisation particuliers donnés à titre d'illustration uniquement et représentés sur les figures annexées dans lesquelles :
- la figure 1 présente en vue de dessus, selon l'axe Z, un mode de réalisation,
- la figure 2 présente en vue de côté, selon l'axe Y, un autre mode de réalisation,
- la figure 3, respectivement la figure 4, présente en vue de côté, selon l'axe Y, un autre mode de réalisation, dans une position repliée, respectivement dans une position déployée,
- la figure 5 présente en vue de côté, selon l'axe Y, un autre mode de réalisation, illustratif d'un premier mode de réalisation du moyen de synchronisation,
- la figure 6 présente en vue de côté, selon l'axe Y, un autre mode de réalisation, illustratif d'un deuxième mode de réalisation du moyen de synchronisation,
- la figure 7 présente en vue de dessus, selon l'axe Z, un autre mode de réalisation mettant en œuvre un moteur et/ou un frein.

Il va de soi que la description détaillée de l'objet de l'invention, donnée uniquement à titre d'illustration, ne constitue en aucune manière une limitation, les équivalents techniques étant également compris dans le champ de la présente invention.

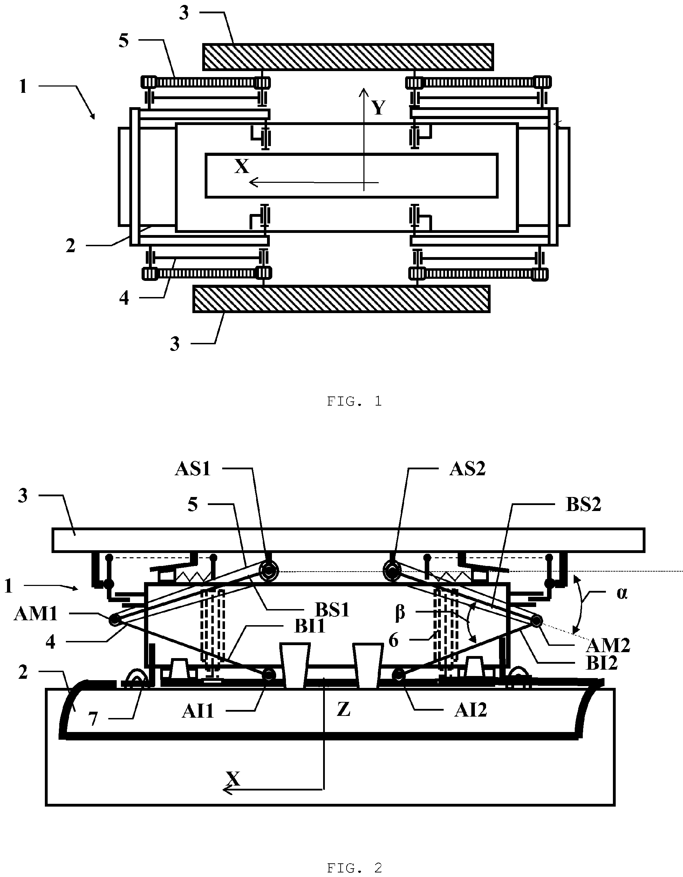

En se référant, par exemple à la figure 2, un éjecteur 1 est typiquement disposé sous un aéronef 3. Un tel éjecteur 1 est intercalé entre l'aéronef 3 et une charge 2. La charge 2 est typiquement fixée sous l'éjecteur 1. Ainsi la charge 2 est emportée sous l'aéronef 3. La fixation est réalisée par des moyens de fixation 7 qui peuvent être ouverts ou supprimés afin de libérer la charge 2 et ainsi procéder à son éjection/largage.

Un éjecteur 1 est typiquement mobile entre une position interne, où la charge 2 est placée à l'intérieur d'une soute disposée à l'intérieur du volume de la cellule de l'aéronef 3, et une position externe, ou d'éjection, où la charge 2 est placée à l'extérieur du volume de la cellule de l'aéronef 3. Afin de permettre une telle mobilité, l'éjecteur 1 comprend un moyen de guidage 4 de la charge 2, disposé entre l'aéronef 3, ou plus précisément une semelle solidaire de l'aéronef 3, et la charge 2, le cas échéant via un berceau solidaire de la charge 2.

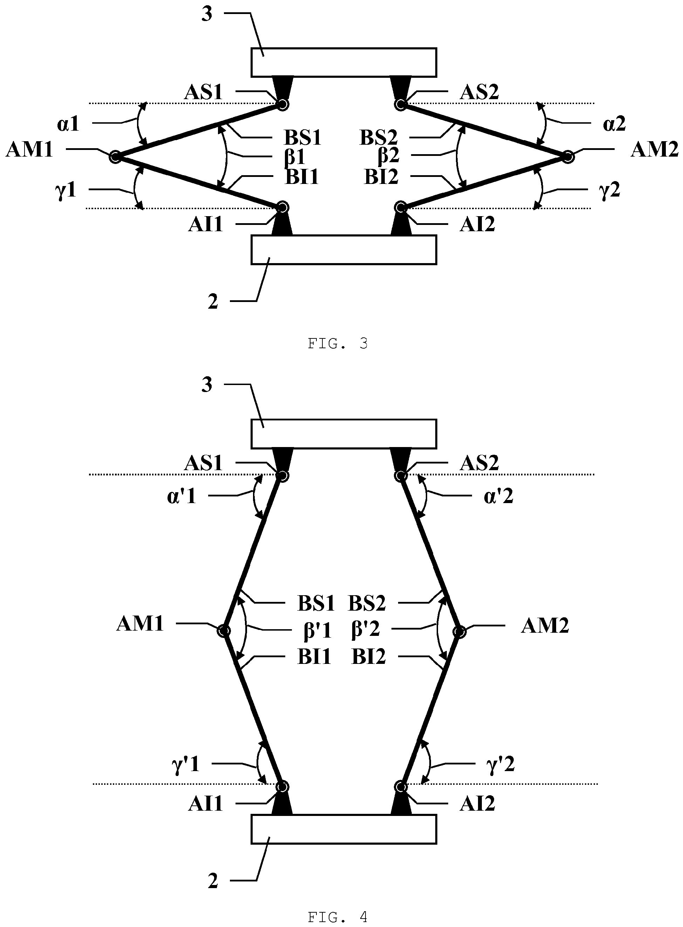

Le moyen de guidage 4 est apte à guider la charge 2 parallèlement à elle-même, sensiblement selon un mouvement de translation, entre la position interne et la position externe et réciproquement. La position interne correspond à une configuration repliée du moyen de guidage 4, tel qu'illustré à la figure 3. La position externe correspond à une configuration déployée du moyen de guidage 4, tel qu'illustré à la figure 4. L'éjecteur 1/son moyen de guidage 4, peut encore être mobile vers et/ou depuis une position de maintenance. La position de maintenance correspond à une configuration déployée, typiquement plus déployée que la position externe, du moyen de guidage 4. La position de maintenance est typiquement employée pour mettre en place plus aisément la charge 2 sur l'éjecteur 1. L'éjecteur 1/le moyen de guidage 4 peut ensuite être replié en position interne afin de rentrer la charge 2 dans la soute.

L'éjecteur 1 comprend, en plus du moyen de guidage 4, des moyens de fixation de l'éjecteur 1 à l'aéronef, des moyens de fixation 7 de l'éjecteur 1 à la charge 2, déjà évoqués, des moyens de déplacement 6 de la charge 2 relativement à l'aéronef 3, par exemple au moins un vérin télescopique 6 tel que représenté à la figure 2. Lesdits moyens de déplacement 6 sont optionnels en ce que le déplacement peut être assuré, au moins pour quitter la position interne, par la gravité.

Selon une caractéristique, le moyen de guidage 4 comprend au moins un premier et un deuxième ensemble de bielles ou demi-pantographe.

Le premier ensemble de bielles comprend une première bielle supérieure BS1 et une première bielle inférieure BI1. Tel que plus particulièrement visible aux figures 2-7, la première bielle supérieure BS1 est articulée, via une première articulation supérieure AS1, avec l'aéronef 3, par une de ses extrémités. La première bielle supérieure BS1 est encore articulée, via une première articulation médiane AM1, avec une des extrémités de la première bielle inférieure BI1, par l'autre de ses extrémités. La première bielle inférieure BI1 est donc articulée, via la première articulation médiane AM1, avec une des extrémités de la première bielle supérieure BS1 par une de ses extrémités. La première bielle inférieure BI1 est encore articulée, via une première articulation inférieure AI1, avec la charge 2, par l'autre de ses extrémités. Les trois premières articulations AS1, AM1, AI1, sont des liaisons pivot, et leur axe sont parallèles.

De manière similaire, le deuxième ensemble de bielles comprend une deuxième bielle supérieure BS2 et une deuxième bielle inférieure BI2. Tel que plus particulièrement visible aux figures 2-7, la deuxième bielle supérieure BS2 est articulée, via une deuxième articulation supérieure AS2, avec l'aéronef 3, par une de ses extrémités. La deuxième bielle supérieure BS2 est encore articulée, via une deuxième articulation médiane AM2, avec une des extrémités de la deuxième bielle inférieure BI2, par l'autre de ses extrémités. La deuxième bielle inférieure BI2 est donc articulée, via la deuxième articulation médiane AM2, avec une des extrémités de la deuxième bielle supérieure BS2 par une de ses extrémités. La deuxième bielle inférieure BI2 est encore articulée, via une deuxième articulation inférieure AI2, avec la charge 2, par l'autre de ses extrémités. Les trois deuxièmes articulations AS2, AM2, AI2, sont des liaisons pivot, et leur axe sont parallèles.

Afin que lors du mouvement de déplacement de l'éjecteur 1, obtenu par déformation des premier et deuxième ensembles de bielles, la charge 2 se déplace parallèlement à elle-même, il convient au moins qu'une condition de longueur des bielles BS1,BI1,BS2,BI2 soit respectée. Cette condition est que la longueur cumulée de la deuxième bielle supérieure BS2 et de la deuxième bielle inférieure BI2, soit la longueur de la deuxième bielle supérieure BS2 ajoutée à la longueur de la deuxième bielle inférieure BI2, soit égale à la longueur cumulée de la première bielle supérieure BS1 et de la première bielle inférieure BI1, soit la longueur de la première bielle supérieure BS1 ajoutée à la longueur de la première bielle inférieure BI1.

Afin que la charge 2 se déplace parallèlement à elle-même, il convient encore que les mouvements des bielles BS1,BI1,BS2,BI2 soit contrôlés afin d'obéir à certaines lois cinématiques. Ceci est réalisé par un moyen de synchronisation 5. Ce moyen de synchronisation 5 assure au moins trois fonctions.

Une première fonction consiste à synchroniser les deux premières bielles BS1,BI1 du premier ensemble. Ceci est réalisé en recopiant, en lui appliquant un premier gain, l'angle de la première articulation supérieure AS1 sur l'angle de la première articulation médiane AM1.

De manière alternative ou complémentaire, la première fonction peut encore être réalisée en recopiant, en lui appliquant un troisième gain, l'angle de la première articulation inférieure AI1 sur l'angle de la première articulation médiane AM1.

Une deuxième fonction, similaire mais appliquée au deuxième ensemble, consiste à synchroniser les deux deuxièmes bielles BS2,BI2 du deuxième ensemble. Ceci est réalisé en recopiant, en lui appliquant un deuxième gain, l'angle de la deuxième articulation supérieure AS2 sur l'angle de la deuxième articulation médiane AM2.

De manière alternative ou complémentaire, la deuxième fonction peut encore être réalisée en recopiant, en lui appliquant un quatrième gain, l'angle de la deuxième articulation inférieure AI2 sur l'angle de la deuxième articulation médiane AM2.

Une troisième fonction consiste à synchroniser le premier ensemble de bielles avec le deuxième ensemble de bielles. Ceci est réalisé en recopiant, le cas échéant, en l'inversant, l'angle de la première articulation supérieure AS1 sur l'angle de la deuxième articulation supérieure AS2. De manière alternative ou complémentaire, la troisième fonction peut encore être réalisée en recopiant, le cas échéant, en l'inversant, l'angle de la première articulation inférieure AI1 sur l'angle de la deuxième articulation inférieure AI2.

Tout en respectant la condition précédente de longueur cumulée des bielles, d'autres conditions de longueur peuvent être retenues en ce qu'elles simplifient les relations cinématiques, notamment les relations angulaires et ainsi simplifie la réalisation du moyen de synchronisation 5.

Une telle condition est que la longueur de la première bielle supérieure BS1 soit égale à la longueur de la deuxième bielle supérieure BS2.

Une telle autre condition est que la longueur de la première bielle supérieure BS1 soit égale à la longueur de la deuxième bielle inférieure BI2. Du fait de la condition de longueur cumulée, qui s'applique toujours, cette condition emporte aussi le fait que la longueur de la première bielle inférieure BI1 soit égale à la longueur de la deuxième bielle supérieure BS2.

Une combinaison des deux conditions précédentes conduit à la condition suivante : la longueur de la première bielle supérieure BS1 est égale à la longueur de la première bielle inférieure BI1, et la longueur de la deuxième bielle supérieure BS2 est égale à la longueur de la deuxième bielle inférieure BI2. Cette dernière condition, du fait de la condition de longueur cumulée, qui s'applique toujours, peut encore s'exprimer : les longueurs des quatre bielles BS1,BI1,BS2,BI2 sont identiques.

Cette dernière condition/configuration préférentielle conduit à une simplification importante des relations cinématiques et angulaires du moyen de guidage 4. Les illustrations et la suite de la description se basent sur une telle configuration simplificatrice.

En observant le moyen de guidage 4 en vue de côté, tel qu'aux figures 2-6, il peut être constaté que le moyen de guidage 4 doit vérifier en permanence au moins une relation angulaire. Ainsi si α désigne génériquement l'angle de l'articulation supérieure AS1,AS2, soit l'angle entre l'aéronef 3 et une bielle supérieure BS1,BS2, avec ses différentes déclinaisons : α1,α1' pour la première articulation supérieure AS1, et α2,α2' pour la deuxième articulation supérieure AS2, β désigne génériquement l'angle de l'articulation médiane AM1,AM2, soit l'angle entre une bielle supérieure BS1,BS2 et la bielle inférieure associée BI1,BI2, avec ses différentes déclinaisons : β1,β1' pour la première articulation médiane AM1, et β2,β2' pour la deuxième articulation médiane AM2, et γ désigne génériquement l'angle de l'articulation inférieure AI1,AI2, soit l'angle entre une bielle inférieure BI1,BI2 et la charge 2, avec ses différentes déclinaisons : γ1,γ1' pour la première articulation inférieure AI1, et γ2,γ2' pour la deuxième articulation inférieure AI2, il doit, pour que la charge 2 soit guidée parallèlement à elle-même, être vérifié la relation 2α=-β=2γ, soit encore 2α1=-β1=2γ1 et 2α2=-β2=2γ2.

Afin de réaliser la première fonction de synchronisation, entre la première bielle supérieure BS1 et la première bielle inférieure BI1, de telle manière à ce que la première articulation inférieure AI1 soit mobile sur une même verticale que la première articulation supérieure AS1, il convient de contraindre l'angle de la première articulation médiane AM1 en fonction de l'angle de la première articulation supérieure AS1, le cas échéant en appliquant un gain. Ceci peut encore s'exprimer, pour la configuration simplificatrice avec des bielles supérieure et inférieure de même longueur, en ce que l'orientation d'une bielle parmi la première bielle supérieure BS1 et la première bielle inférieure BI1 est symétrique de l'orientation de l'autre bielle BI1,BS1 relativement à l'horizontale, figurée par l'aéronef 3 ou la charge 2.

Aussi, afin de réaliser la première fonction de synchronisation, il convient de contraindre l'angle β1 de la première articulation médiane AM1 en fonction de l'angle α1 de la première articulation supérieure AS1, en lui appliquant un premier gain, ici de -2.

Un mode de réalisation alternatif de la première fonction de synchronisation, consiste à contraindre l'angle β1 de la première articulation médiane AM1 en fonction de l'angle γ1 de la première articulation inférieure AI1, en lui appliquant un troisième gain, ici de -2.

Le fait que le moyen de synchronisation 5 contraigne ainsi l'angle β1 de la première articulation médiane AM1 en fonction de l'angle α1 de la première articulation supérieure AS1, en lui appliquant un gain, est mécaniquement suffisant pour contraindre un déplacement vertical de la première articulation inférieure AI1 relativement à la première articulation supérieure AS1 et ainsi assurer un guidage de la charge 2 parallèlement à elle-même. Autrement dit, réaliser la relation angulaire β1=-2α1, assure la réalisation de la relation β1=-2γ1 et ainsi γ1=α1. Aussi les deux modes de réalisation peuvent être alternatifs.

Cependant, les deux modes de réalisation peuvent encore être combinés de manière complémentaire. Même si une telle combinaison est mécaniquement et théoriquement superstatique, elle permet avantageusement dans la pratique, en présence de possibles déformations et/ou élasticités, de réaliser un moyen de guidage 4 plus rigide.

Les mêmes raisonnements s'appliquent mutatis mutandis à la deuxième fonction de synchronisation entre la deuxième bielle supérieure BS2 et la deuxième bielle inférieure BI2, en contraignant les angles α2, β2, et γ2.

Afin de réaliser la troisième fonction de synchronisation, à savoir une synchronisation entre le premier ensemble de bielles et le deuxième ensemble de bielles, de telle manière à ce que la première articulation inférieure AI1 se trouve à tout moment à la même hauteur que la deuxième articulation inférieure AI2, il convient de contraindre l'angle α1 de la première articulation supérieure AS1 et l'angle a2 de la deuxième articulation supérieure AS2 pour qu'ils soient égaux en valeur absolue, soit en appliquant un cinquième gain de 1 ou -1.

Un mode de réalisation alternatif de la troisième fonction de synchronisation, consiste à contraindre l'angle γ1 de la première articulation inférieure AI1 en fonction de l'angle γ2 de la deuxième articulation inférieure AI2, en lui appliquant un sixième gain, ici de +/-1.

Le fait que le moyen de synchronisation 5 contraigne ainsi l'angle α1 de la première articulation supérieure AS1 en fonction de l'angle a2 de la deuxième articulation supérieure AS2, est mécaniquement suffisant pour obtenir un même déplacement vertical de la première articulation inférieure AI1 relativement à la première articulation supérieure AS1 et de la deuxième articulation inférieure AI2 relativement à la deuxième articulation supérieure AS2 et ainsi assurer un guidage de la charge 2 parallèlement à elle-même. Ainsi réaliser la relation angulaire |α2|=|α1|, assure la réalisation de la relation |γ2| = |γ1|. Aussi les deux modes de réalisation peuvent être alternatifs.

Cependant, les deux modes de réalisation peuvent encore être combinés de manière complémentaire. Même si une telle combinaison est mécaniquement et théoriquement superstatique, elle permet avantageusement dans la pratique, en présence de possibles déformations et/ou élasticités, de réaliser un moyen de guidage 4 plus rigide.

Un mode de réalisation possible du moyen de synchronisation 5 comprend des prises de mouvement solidarisées en rotation par des moyens de transmission. Une prise de mouvement est typiquement disposée au niveau d'une articulation et solidarisée en rotation avec l'un parmi les deux éléments dont l'articulation permet la rotation relative. Ainsi lorsque l'articulation tourne, la prise de mouvement recopie l'angle de l'articulation relativement à l'autre des deux éléments. Une prise de mouvement agit de manière réversible. Ainsi une prise de mouvement est apte d'une part à mesurer/relever un angle d'une articulation pour le recopier, via un moyen de transmission, vers une autre prise de mouvement et d'autre part à transmettre un angle reçu, via un moyen de transmission, d'une autre prise de mouvement et à le recopier/imposer à l'articulation à laquelle elle est attachée, en faisant tourner l'élément auquel elle est solidarisé, dudit angle.

Une prise de mouvement peut au choix être solidaire en rotation d'un élément parmi les deux éléments articulés ou de l'autre desdits deux éléments. Si elle est solidaire d'un élément la prise de mouvement voit/recopie un angle θ. Au contraire si est solidaire de l'autre élément la prise de mouvement voit/recopie un angle opposé -θ. Il convient de remarquer que ceci peut être un moyen de réaliser un inverseur.

Ainsi, par exemple, la première prise de mouvement supérieure PS1 est alignée avec la première articulation supérieure AS1 permettant d'articuler un élément constitué par l'aéronef 3 et un autre élément constitué par la première bielle supérieure BS1. L'angle α1 est l'angle de la première articulation supérieure AS1. Si la première prise de mouvement supérieure PS1 est solidaire de l'aéronef 3, elle voit/tourne d'un angle -α1 relativement à la bielle supérieure BS1 lorsque la première articulation supérieure AS1 tourne d'un angle α1. Au contraire, si la première prise de mouvement supérieure PS1 est solidaire de la bielle supérieure BS1, elle voit/tourne d'un angle α1 relativement à l'aéronef 3 lorsque la première articulation supérieure AS1 tourne d'un angle α1.

Un gain algébrique (signé), pouvant comprendre un inverseur, permet, le cas échéant, de corriger ce changement de sens. L'élément parmi les deux éléments auquel est solidarisée une prise de mouvement est repéré sur les figures par un trait radial, figurant symboliquement une goupille.

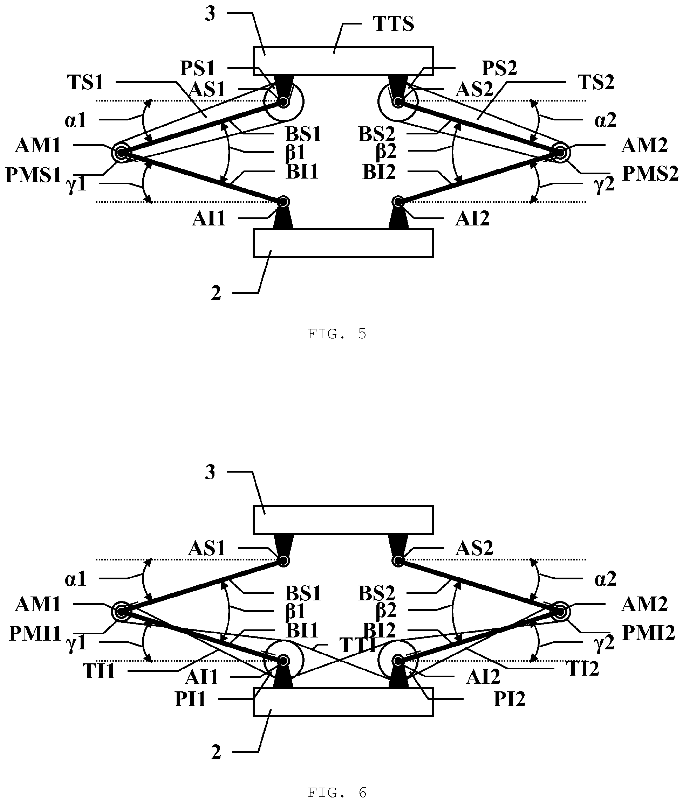

Ainsi, tel que plus particulièrement illustré à la figure 5, afin de réaliser la première fonction de synchronisation, le moyen de synchronisation 5 comprend une première prise de mouvement supérieure PS1, disposée au niveau de la première articulation supérieure AS1 et apte à tourner selon l'angle de la première articulation supérieure AS1, une première prise de mouvement médiane supérieure PMS1, disposée au niveau de la première articulation médiane AM1 et apte à tourner selon l'angle de la première articulation médiane AS1 et un premier moyen de transmission rotatif supérieur TS1, apte à transmettre la rotation entre la première prise de mouvement supérieure PS1 et la première prise de mouvement médiane supérieure PMS1, comportant un moyen multiplicateur selon le premier gain. La première prise de mouvement médiane supérieure PMS1 est solidaire en rotation de la première bielle inférieure BI1, tandis que la première prise de mouvement supérieure PS1 est solidaire, au choix, de l'aéronef 3 avec un gain de 2 ou de la première bielle supérieure BS1, avec un gain opposé de -2.

De manière analogue, tel que plus particulièrement illustré à la figure 5, afin de réaliser la deuxième fonction de synchronisation, le moyen de synchronisation 5 comprend une deuxième prise de mouvement supérieure PS2, disposée au niveau de la deuxième articulation supérieure AS2 et apte à tourner selon l'angle de la deuxième articulation supérieure AS2, une deuxième prise de mouvement médiane supérieure PMS2, disposée au niveau de la deuxième articulation médiane AM2 et apte à tourner selon l'angle de la deuxième articulation médiane AM2 et un deuxième moyen de transmission rotatif supérieur TS2, apte à transmettre la rotation entre la deuxième prise de mouvement supérieure PS2 et la deuxième prise de mouvement médiane supérieure PMS2, comportant un moyen multiplicateur selon le deuxième gain. La deuxième prise de mouvement médiane supérieure PMS2 est solidaire en rotation de la deuxième bielle inférieure BI2, tandis que la deuxième prise de mouvement supérieure PS2 est solidaire, au choix, de l'aéronef 3 avec un gain de 2 ou de la deuxième bielle supérieure BS2, avec un gain opposé de -2.

Tel que plus particulièrement illustré à la figure 5, afin de réaliser la troisième fonction de synchronisation, le moyen de synchronisation 5 comprend encore un moyen de transmission rotatif transverse supérieur TTS, apte à transmettre la rotation entre la première prise de mouvement supérieure PS1 et la deuxième prise de mouvement supérieure PS2, comportant un moyen multiplicateur selon le cinquième gain.

Selon un mode de réalisation particulier, plus particulièrement illustré à la figure 5, un moyen de transmission rotatif transverse TTS,TTI peut être réalisé de manière triviale par un double crabotage des prises de mouvement sur un même élément. Ainsi dans l'exemple illustré à la figure 5, les prises de mouvement supérieures PS1,PS2, sont toutes deux solidaires en rotation de l'aéronef 3. Ceci garantit que toutes deux ont un même mouvement de rotation, ici trivialement nul.

Afin de réaliser les modes alternatifs de chacune de ces fonctions, le moyen de synchronisation 5 comprend encore de manière alternative ou complémentaire les moyens suivants.

Pour réaliser la première fonction : une première prise de mouvement inférieure PI1, disposée au niveau de la première articulation inférieure AI1 et apte à tourner selon l'angle de la première articulation inférieure AI1, une première prise de mouvement médiane inférieure PMI1, disposée au niveau de la première articulation médiane AM1 apte à tourner selon l'angle de la première articulation médiane AS1 et solidaire en rotation de la première bielle supérieure BS1, et un premier moyen de transmission rotatif inférieur TI1 entre la première prise de mouvement inférieure PI1 et la première prise de mouvement médiane supérieure PMS1 comportant un moyen multiplicateur selon le troisième gain.

Pour réaliser la deuxième fonction : une deuxième prise de mouvement inférieure PI2, disposée au niveau de la deuxième articulation inférieure AI2 et apte à tourner selon l'angle de la deuxième articulation inférieure AI2, une deuxième prise de mouvement médiane inférieure PMI2, disposée au niveau de la deuxième articulation médiane AM2 apte à tourner selon l'angle de la deuxième articulation médiane AM2 et solidaire en rotation de la deuxième bielle supérieure BS2, et un deuxième moyen de transmission rotatif inférieur TI2 entre la deuxième prise de mouvement inférieure PI2 et la deuxième prise de mouvement médiane inférieure PMI2, comportant un moyen multiplicateur selon le quatrième gain.

Il peut être noté qu'une prise de mouvement médiane supérieur PMS1,PMS2 diffère d'une prise de mouvement médiane inférieure PMI1,PMI2, bien que toutes deux situées au niveau d'une articulation médiane AM1, AM2, en ce la référence angulaire change. Une prise de mouvement médiane supérieure PMS1,PMS2 est solidaire en rotation d'une bielle inférieure BI1,BI2, tandis qu'une prise de mouvement médiane inférieure PMI1,PMI2 est solidaire en rotation d'une bielle supérieure BS1,BS2.

Pour réaliser la troisième fonction : un moyen de transmission rotatif transverse inférieur TTI entre la première prise de mouvement inférieure PI1 et la deuxième prise de mouvement inférieure PI2, comportant un moyen multiplicateur selon le sixième gain.

Il a été vu que de l'élément de référence d'une prise de mouvement dépendait le sens de l'angle, et que ledit sens pouvait être corrigé par le signe du gain.

Ainsi, si la première prise de mouvement supérieure PS1 est solidaire en rotation de l'aéronef 3 alors le premier gain est avantageusement égal à 2 et si la première prise de mouvement supérieure PS1 est solidaire en rotation de la première bielle supérieure BS1 alors le premier gain est avantageusement égal à -2,

De manière analogue, si la deuxième prise de mouvement supérieure PS2 est solidaire en rotation de l'aéronef 3 alors le deuxième gain est avantageusement égal à 2 et si la deuxième prise de mouvement supérieure PS2 est solidaire en rotation de la deuxième bielle supérieure BS2 alors le deuxième gain est avantageusement égal à -2.

Il en est de même pour les modes de réalisation alternatifs. Si la première prise de mouvement inférieure PI1 est solidaire en rotation de la charge 2 alors le troisième gain est avantageusement égal à 2 et si la première prise de mouvement inférieure PI1 est solidaire en rotation de la première bielle inférieure BI1 alors le troisième gain est avantageusement égal à -2.

De manière analogue, si la deuxième prise de mouvement inférieure PI2 est solidaire en rotation de la charge 2 alors le quatrième gain est avantageusement égal à 2 et si la deuxième prise de mouvement inférieure PI2 est solidaire en rotation de la deuxième bielle inférieure BI2 alors le quatrième gain est avantageusement égal à -2.

Un gain est avantageusement appliqué par un moyen de transmission et/ou une prise de mouvement. Un gain de 2 est réalisé par un moyen doubleur. Un changement de signe du gain est réalisé par un inverseur. Un gain de -2 est typiquement réalisé par un moyen doubleur combiné à un inverseur.

Toute technologie de transmission de mouvement rotatif est éligible à la réalisation de l'invention. L'homme du métier adapte les moyens utilisés aux fonctions : multiplicateur, doubleur, inverseur.

Selon une technologie, la transmission de mouvement rotatif est réalisée par un lien sensiblement inextensible de type courroie, câble, chaîne, etc. Dans ce cas, une prise de mouvement PS1,PS2,PMS1,PMS2,PMI1,PMI2,PI1,PI2 comprend une poulie adaptée au moyen de transmission et un moyen de transmission TS1,TS2,TTS,TI1,TI2,TTI comprend une courroie, préférentiellement crantée, une chaîne, ou un câble, disposée entre les deux prises de mouvement associées. Selon ce type de technologie, un moyen inverseur peut être réalisé par un croisement du moyen de transmission. Selon ce type de technologie, un moyen multiplicateur/doubleur comprend la première prise de mouvement présentant un diamètre multiple/double du diamètre de la deuxième prise de mouvement associée.

Ainsi, par exemple, tel qu'illustré à la figure 5, la prise de mouvement supérieure PS1,PS2 est solidaire de l'aéronef 3. Il est souhaité appliquer un premier et/ou troisième gain égal à deux. Un tel gain est par exemple ici réalisé au moyen d'une poulie supérieure PS1,PS2 de diamètre double de la poulie médiane supérieure PMS1,PMS2. Une inversion ayant été réalisée au moyen d'une référence fixe pour la prise de mouvement supérieure PS1,PS2, il est ici souhaité un gain positif 2. Aucun inverseur supplémentaire n'est nécessaire et une courroie/câble droit, non croisé, peut être disposé entre les deux prises de mouvement PS1,PS2,PMS1,PMS2.

Au contraire, tel qu'illustré à la figure 6, la prise de mouvement inférieure PI1,PI2 est solidaire de la bielle inférieure BI1,BI2. Il est souhaité appliquer un deuxième et/ou quatrième gain égal à deux. Un tel gain est par exemple ici réalisé au moyen d'une poulie inférieure PI1,PI2 de diamètre double de la poulie médiane inférieure PMI1,PMI2. Aucune inversion n'est réalisée du fait d'une référence mobile, liée à la bielle inférieure BI1,BI2, pour la prise de mouvement inférieure PI1,PI2, il est ici souhaité un gain négatif -2. Un inverseur supplémentaire est nécessaire. Un tel inverseur peut être réalisé par le croisement d'une courroie ou câble du moyen de transmission inférieur TI1,TI2 disposé entre les deux prises de mouvement PI1,PI2,PMI1,PMI2.

Selon une autre technologie, la transmission de mouvement rotatif est réalisée par au moins deux engrenages. Dans ce cas, une prise de mouvement PS1,PS2, PMS1,PMS2, PMI1,PMI2, PI1,PI2 comprend avantageusement une roue dentée et un moyen de transmission TS1,TS2,TTS, TI1,TI2,TTI comprend un nombre de roues dentées intermédiaires successivement engrenées entre les deux prises de mouvement associées, ce nombre pouvant être zéro si les deux prises de mouvement associées engrènent directement. Dans cette technologie, un moyen inverseur comprend un nombre impair d'engrènements entre deux prises de mouvement associées. Ainsi si les deux prises de mouvement/roues dentées engrènent directement l'une avec l'autre, on est en présence d'un unique engrènement, soit un nombre impair d'engrènement, réalisant un inverseur. Si le moyen de transmission comprend une roue dentée engrenée respectivement avec les deux prises de mouvement/roues dentées, on est en présence de deux engrènements, soit un nombre pair d'engrènement, la transmission conserve le sens du mouvement rotatif. Dans cette technologie, un moyen multiplicateur, respectivement doubleur, comprend un rapport de réduction égal au gain, respectivement égal à deux, entre les deux prises de mouvement associées. De manière connue, un tel rapport de réduction peut être obtenu en une fois, avec une roue dentée menante de diamètre multiple, respectivement double, du diamètre d'une roue dentée menée, avantageusement dans le cas où seules deux roues dentées sont présentes, mais peut encore être réalisé en plusieurs fois, dans le cas où plus de deux roues dentées sont présentes, pour peu que le produit des rapports de réduction soit égal au gain, respectivement à 2.

Il est bien évidemment possible de combiner les deux technologies précédentes et avoir, par exemple, un moyen de transmission comprenant au moins une courroie assurant un déport et au moins deux roues dentées assurant une inversion de sens.

Tel que décrit jusqu'ici, le moyen de guidage 4 est passif en ce qu'il nécessite un moyen extérieur pour assurer sa mobilité entre la position interne, la position externe et une éventuelle position de maintenance.

Ceci est avantageux en ce que le moyen de guidage 4 est dimensionné uniquement en fonction des efforts qu'il subit, soit le poids de la charge 2 et surtout les efforts aérodynamiques auquel il est soumis, principalement en position externe.

Selon un mode de réalisation, la mobilité de la charge 2 et ainsi du moyen de guidage 4 est assurée par un moyen extérieur. Ce moyen extérieur peut comprendre la pesanteur. Ce moyen extérieur peut encore être au moins un vérin 6 avantageusement télescopique. Ledit au moins un vérin 6 assure la sortie de la charge 2 d'une position interne vers une position externe, le cas échéant aidé par la pesanteur. La rentrée de l'éjecteur 1 en position interne, ou les transitions aller/retour vers une position de maintenance peuvent encore être assurées par ce même au moins un vérin 6, si ledit au moins un vérin 6 est double effet. Alternativement, ou dans le cas d'un vérin 6 simple effet, il est possible de lui adjoindre un moyen de rappel, typiquement armé lors du mouvement de sortie, afin d'être apte à réaliser le mouvement de rentrée.

Alternativement ou complémentairement à un tel moyen extérieur, la mobilité de la charge 2 et du moyen de guidage 4 peut être réalisée et/ou assistée, totalement ou partiellement, par un moyen intégré au moyen de guidage 4.

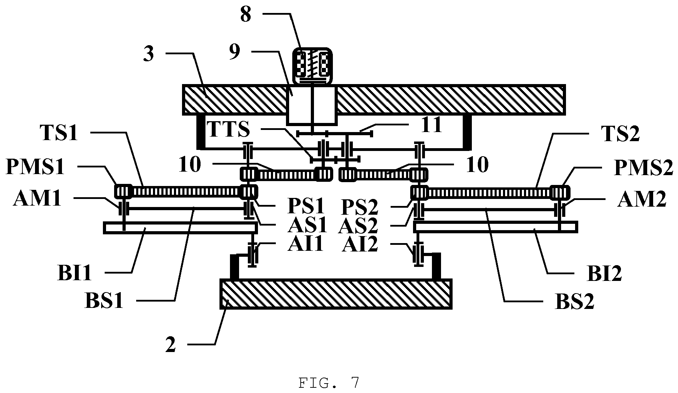

Pour cela, tel que plus particulièrement illustré à la figure 7, l'une au moins des prises de mouvement PS1,PS2, PMS1,PMS2, PMI1,PMI2, PI1,PI2 peut être solidaire en rotation d'un frein 8, d'un moyen de rappel (non représenté) et/ou d'un moteur 9. Cette solidarisation peut être réalisée au travers d'au moins un moyen de transmission de mouvement rotatif.

Un frein 8, en limitant la vitesse de rotation d'une prise de mouvement, peut ainsi avantageusement permettre de ralentir ou de stopper un mouvement du moyen de guidage 4. Un frein 8 peut ainsi principalement permettre de contrôler une vitesse de sortie de la charge 2 en s'opposant à la pesanteur ou à tout autre moyen de mobilisation (moteur, moyen de rappel, etc).

Un moyen de rappel peut typiquement être utilisé pour réaliser un mouvement retour, d'un mouvement aller réalisé au moyen d'un autre moyen de mobilisation. Ainsi selon un mode de réalisation avantageux, un moyen de rappel, tel par exemple un ressort de torsion, est armé lors d'une phase de sortie de la charge 2, réalisée par tout moyen. Le moyen de rappel peut alors assurer la rentrée de l'éjecteur 1/moyen de guidage 4. Cette rentrée est d'autant plus aisée, si la charge 2 a été typiquement larguée depuis la position externe, et que le poids à vaincre pour revenir en position interne lors de la rentrée est sensiblement réduit d'autant, puisque limité au seul poids de l'éjecteur 1.

Un moteur 9 peut être utilisé pour réaliser, ralentir en s'opposant ou assister tout mouvement de l'éjecteur 1, avec ou sans charge 2.

Il est bien évidemment possible de combiner au moins un moyen de rappel, au moins un frein 8 et/ou au moins un moteur 9.

Il a été vu qu'un éjecteur 1/moyen de guidage 4 comprend au moins un premier ensemble de bielles comprenant la première bielle supérieure BS1 et la première bielle inférieure BI1 et au moins un deuxième ensemble de bielles comprenant la deuxième bielle supérieure BS1 et la deuxième bielle inférieure BI1. Avantageusement, ledit au moins un premier ensemble est disposé d'un premier côté de la charge 2, et ledit au moins un deuxième ensemble est disposé d'un deuxième côté de la charge 2, sensiblement opposé au premier côté. Les deux côtés opposés peuvent être gauche et droite ou encore avant et arrière, relativement aux axes X et Y de l'aéronef 3.

Avantageusement encore au moins un premier ensemble de bielles est disposé symétriquement relativement à au moins un deuxième ensemble de bielles. Une telle configuration est avantageuse en ce qu'elle permet de répartir les efforts.

Les ensembles de bielles peuvent être disposés de manière quelconque. Cependant la forme en ciseau des ensembles de bielles est avantageusement mise à profit lorsque les articulations médianes AM1, AM2 sont disposées à l'extérieur du volume de travail de l'éjecteur 1. Pour cela, tel que représenté sur les figures 1-7, un ensemble de bielles est avantageusement disposé de manière à ce que l'articulation médiane AM1,AM2 soit généralement plus éloignée de la charge 2 que l'articulation supérieure AS1,AS2 et que l'articulation inférieure AI1,AI2.

## Revendications

1. Ejecteur (1) pour charge (2) configuré pour être emportée sous un aéronef (3), comprenant un moyen de guidage (4) de la charge (2), configuré pour être disposé entre l'aéronef (3) et la charge (2), et apte à guider la charge (2) parallèlement à elle-même, sensiblement selon un mouvement de translation, ledit moyen de guidage (4) comprenant :
- une première bielle supérieure (BS1),
- une première bielle inférieure (BI1),
la première bielle supérieure (BS1) étant configuré pour être articulée avec l'aéronef (3) par une de ses extrémités au niveau d'une première articulation supérieure (AS1), et avec une des extrémités de la première bielle inférieure (BI1) par l'autre de ses extrémités au niveau d'une première articulation médiane (AM1),
la première bielle inférieure (BI1) étant articulée avec la charge (2) par l'autre de ses extrémités au niveau d'une première articulation inférieure (AI1),
les axes des trois premières articulations (AS1, AM1, AI1) étant parallèles,
- une deuxième bielle supérieure (BS2),
- une deuxième bielle inférieure (BI2),
la deuxième bielle supérieure (BS2) étant configuré pour être articulée avec l'aéronef (3) par une de ses extrémités au niveau d'une deuxième articulation supérieure (AS2), et avec une des extrémités de la deuxième bielle inférieure (BI2) par l'autre de ses extrémités au niveau d'une deuxième articulation médiane (AM2),
la deuxième bielle inférieure (BI2) étant articulée avec la charge (2) par l'autre de ses extrémités au niveau d'une deuxième articulation inférieure (AI2),
les axes des trois deuxièmes articulations (AS2, AM2, AI2) étant parallèles,
la longueur cumulée de la deuxième bielle supérieure (BS2) et de la deuxième bielle inférieure (BI2) étant égale à la longueur cumulée de la première bielle supérieure (BS1) et de la première bielle inférieure (BI1), et
- un moyen de synchronisation (5) apte à recopier, en lui appliquant un premier gain, l'angle de la première articulation supérieure (AS1) sur l'angle de la première articulation médiane (AM1), apte à recopier, en lui appliquant un deuxième gain, l'angle de la deuxième articulation supérieure (AS2) sur l'angle de la deuxième articulation médiane (AM2) et apte à recopier, en lui appliquant un cinquième gain, l'angle de la première articulation supérieure (AS1) sur l'angle de la deuxième articulation supérieure (AS2),
**caractérisé en ce que** le moyen de synchronisation (5) comprend en outre :
- une première prise de mouvement supérieure (PS1), disposée au niveau de la première articulation supérieure (AS1) et apte à tourner selon l'angle de la première articulation supérieure (AS1),
- une première prise de mouvement médiane supérieure (PMS1), disposée au niveau de la première articulation médiane (AM1) apte à tourner selon l'angle de la première articulation médiane (AS1) et solidaire en rotation de la première bielle inférieure (BI1),
- un premier moyen de transmission rotatif supérieur (TS1) entre la première prise de mouvement supérieure (PS1) et la première prise de mouvement médiane supérieure (PMS1), comportant un moyen multiplicateur selon le premier gain,
- une deuxième prise de mouvement supérieure (PS2), disposée au niveau de la deuxième articulation supérieure (AS2) et apte à tourner selon l'angle de la deuxième articulation supérieure (AS2),
- une deuxième prise de mouvement médiane supérieure (PMS2), disposée au niveau de la deuxième articulation médiane (AM2) apte à tourner selon l'angle de la deuxième articulation médiane (AM2) et solidaire en rotation de la deuxième bielle inférieure (BI2),
- un deuxième moyen de transmission rotatif supérieur (TS2) entre la deuxième prise de mouvement supérieure (PS2) et la deuxième prise de mouvement médiane supérieure (PMS2), comportant un moyen multiplicateur selon le deuxième gain,
- un moyen de transmission rotatif transverse supérieur (TTS) entre la première prise de mouvement supérieure (PS 1) et la deuxième prise de mouvement supérieure (PS2), comportant un moyen multiplicateur selon le cinquième gain.

2. Ejecteur (1) pour charge (2) configuré pour être emportée sous un aéronef (3), comprenant un moyen de guidage (4) de la charge (2), configuré pour être disposé entre l'aéronef (3) et la charge (2), et apte à guider la charge (2) parallèlement à elle-même, sensiblement selon un mouvement de translation, ledit moyen de guidage (4) comprenant :
- une première bielle supérieure (BS1),
- une première bielle inférieure (BI1),
la première bielle supérieure (BS1) étant configuré pour être articulée avec l'aéronef (3) par une de ses extrémités au niveau d'une première articulation supérieure (AS1), et avec une des extrémités de la première bielle inférieure (BI1) par l'autre de ses extrémités au niveau d'une première articulation médiane (AM1),
la première bielle inférieure (BI1) étant articulée avec la charge (2) par l'autre de ses extrémités au niveau d'une première articulation inférieure (AI1),
les axes des trois premières articulations (AS1, AM1, AI1) étant parallèles,
- une deuxième bielle supérieure (BS2),
- une deuxième bielle inférieure (BI2),
la deuxième bielle supérieure (BS2) étant configuré pour être articulée avec l'aéronef (3) par une de ses extrémités au niveau d'une deuxième articulation supérieure (AS2), et avec une des extrémités de la deuxième bielle inférieure (BI2) par l'autre de ses extrémités au niveau d'une deuxième articulation médiane (AM2),
la deuxième bielle inférieure (BI2) étant articulée avec la charge (2) par l'autre de ses extrémités au niveau d'une deuxième articulation inférieure (AI2),
les axes des trois deuxièmes articulations (AS2, AM2, AI2) étant parallèles,
la longueur cumulée de la deuxième bielle supérieure (BS2) et de la deuxième bielle inférieure (BI2) étant égale à la longueur cumulée de la première bielle supérieure (BS1) et de la première bielle inférieure (BI1), et
- un moyen de synchronisation (5) apte à recopier, en lui appliquant un premier gain, l'angle de la première articulation supérieure (AS1) sur l'angle de la première articulation médiane (AM1), apte à recopier, en lui appliquant un deuxième gain, l'angle de la deuxième articulation supérieure (AS2) sur l'angle de la deuxième articulation médiane (AM2) et apte à recopier, en lui appliquant un cinquième gain, l'angle de la première articulation supérieure (AS1) sur l'angle de la deuxième articulation supérieure (AS2),
caractérisé et en ce que le moyen de synchronisation (5) comprend en outre :
- une première prise de mouvement inférieure (PI1), disposée au niveau de la première articulation inférieure (AI1) et apte à tourner selon l'angle de la première articulation inférieure (AI1),
- une première prise de mouvement médiane inférieure (PMI1), disposée au niveau de la première articulation médiane (AM1) apte à tourner selon l'angle de la première articulation médiane (AS1) et solidaire en rotation de la première bielle supérieure (BS 1),
- un premier moyen de transmission rotatif inférieur (TI1) entre la première prise de mouvement inférieure (PI1) et la première prise de mouvement médiane supérieure (PMS1), comportant un moyen multiplicateur selon un troisième gain,
- une deuxième prise de mouvement inférieure (PI2), disposée au niveau de la deuxième articulation inférieure (AI2) et apte à tourner selon l'angle de la deuxième articulation inférieure (AI2),
- une deuxième prise de mouvement médiane inférieure (PMI2), disposée au niveau de la deuxième articulation médiane (AM2) apte à tourner selon l'angle de la deuxième articulation médiane (AM2) et solidaire en rotation de la deuxième bielle supérieure (BS2),
- un deuxième moyen de transmission rotatif inférieur (TI2) entre la deuxième prise de mouvement inférieure (PI2) et la deuxième prise de mouvement médiane inférieure (PMI2), comportant un moyen multiplicateur selon un quatrième gain,
- un moyen de transmission rotatif transverse inférieur (TTI) entre la première prise de mouvement inférieure (PI1) et la deuxième prise de mouvement inférieure (PI2), comportant un moyen multiplicateur selon le sixième gain,
et en ce que le moyen de synchronisation (5) est encore apte à recopier, en lui appliquant le troisième gain, l'angle de la première articulation inférieure (AI1) sur l'angle de la première articulation médiane (AM1), apte à recopier, en lui appliquant le quatrième gain, l'angle de la deuxième articulation inférieure (AI2), sur l'angle de la deuxième articulation médiane (AM2), et apte à recopier, en lui appliquant un sixième gain, l'angle de la première articulation inférieure (AI1), sur l'angle de la deuxième articulation inférieure (AI2).

3. Ejecteur (1) selon la revendication 2, **caractérisé en ce que** le moyen de synchronisation (5) comprend en outre :
- une première prise de mouvement supérieure (PS1), disposée au niveau de la première articulation supérieure (AS1) et apte à tourner selon l'angle de la première articulation supérieure (AS1),
- une première prise de mouvement médiane supérieure (PMS1), disposée au niveau de la première articulation médiane (AM1) apte à tourner selon l'angle de la première articulation médiane (AS1) et solidaire en rotation de la première bielle inférieure (BI1),
- un premier moyen de transmission rotatif supérieur (TS1) entre la première prise de mouvement supérieure (PS1) et la première prise de mouvement médiane supérieure (PMS1), comportant un moyen multiplicateur selon le premier gain,
- une deuxième prise de mouvement supérieure (PS2), disposée au niveau de la deuxième articulation supérieure (AS2) et apte à tourner selon l'angle de la deuxième articulation supérieure (AS2),
- une deuxième prise de mouvement médiane supérieure (PMS2), disposée au niveau de la deuxième articulation médiane (AM2) apte à tourner selon l'angle de la deuxième articulation médiane (AM2) et solidaire en rotation de la deuxième bielle inférieure (BI2),
- un deuxième moyen de transmission rotatif supérieur (TS2) entre la deuxième prise de mouvement supérieure (PS2) et la deuxième prise de mouvement médiane supérieure (PMS2), comportant un moyen multiplicateur selon le deuxième gain,
- un moyen de transmission rotatif transverse supérieur (TTS) entre la première prise de mouvement supérieure (PS 1) et la deuxième prise de mouvement supérieure (PS2), comportant un moyen multiplicateur selon le cinquième gain.

4. Ejecteur (1) selon l'une des revendications 1 à 3, où la longueur de la première bielle supérieure (BS1) est égale à la longueur de la deuxième bielle supérieure (BS2).

5. Ejecteur (1) selon l'une des revendications 1 à 4, où la longueur de la première bielle supérieure (BS1) est égale à la longueur de la deuxième bielle inférieure (BI2).

6. Ejecteur (1) selon l'une des revendications 1 à 5, où la longueur de la première bielle supérieure (BS1) est égale à la longueur de la première bielle inférieure (BI1), et la longueur de la deuxième bielle supérieure (BS2) est égale à la longueur de la deuxième bielle inférieure (BI2).

7. Ejecteur (1) selon l'une quelconque des revendications précédentes, où la première prise de mouvement supérieure (PS1) est configuré pour être solidaire en rotation de l'aéronef (3) et le premier gain est égal à 2 ou la première prise de mouvement supérieure (PS 1) est solidaire en rotation de la première bielle supérieure (BS1) et le premier gain est égal à -2,
où la deuxième prise de mouvement supérieure (PS2) est configuré pour être solidaire en rotation de l'aéronef (3) et le deuxième gain est égal à 2 ou la deuxième prise de mouvement supérieure (PS2) est solidaire en rotation de la deuxième bielle supérieure (BS2) et le deuxième gain est égal à -2,
où la première prise de mouvement inférieure (PI1) est solidaire en rotation de la charge (2) et le troisième gain est égal à 2 ou la première prise de mouvement inférieure (PI1) est solidaire en rotation de la première bielle inférieure (BI1) et le troisième gain est égal à -2,
où la deuxième prise de mouvement inférieure (PI2) est solidaire en rotation de la charge (2) et le quatrième gain est égal à 2 ou la deuxième prise de mouvement inférieure (PI2) est solidaire en rotation de la deuxième bielle inférieure (BI2) et le quatrième gain est égal à -2,
où un moyen de transmission comprend un moyen doubleur pour réaliser un gain de 2, et un moyen doubleur et un moyen inverseur pour réaliser un gain de -2, et
où le cinquième gain, respectivement le sixième gain, est égal à +/-1.

8. Ejecteur (1) selon l'une quelconque des revendications précédentes, où au moins un premier ensemble de bielles comprenant la première bielle supérieure (BS1) et la première bielle inférieure (BI1) est disposé d'un premier côté de la charge (2), et au moins un deuxième ensemble de bielles comprenant la deuxième bielle supérieure (BS1) et la deuxième bielle inférieure (BI1) est disposé d'un deuxième côté de la charge (2), sensiblement opposé au premier côté.

9. Ejecteur (1) selon la revendication 8, où un premier ensemble de bielles est disposé symétriquement relativement à un deuxième ensemble de bielles et le cinquième gain et/ou le sixième gain est égal à -1.

10. Ejecteur (1) selon l'une quelconque des revendications 8 à 9, où au moins un ensemble de bielles est configuré pour être disposé de manière à ce que l'articulation médiane (AM1,AM2) soit généralement plus éloignée de la charge (2) que l'articulation supérieure (AS1,AS2) et que l'articulation inférieure (AI1,AI2), selon une direction comprise dans un plan horizontal (XY) de l'aéronef (3).

11. Ejecteur (1) selon l'une quelconque des revendications précédentes, où une prise de mouvement (PS1,PS2,PMS1,PMS2,PMI1,PMI2,PI1,PI2) comprend une poulie adaptée au moyen de transmission, où un moyen de transmission (TS1,TS2,TTS,TI1,TI2,TTI) comprend une courroie, préférentiellement crantée, une chaîne, ou un câble, disposée entre les deux prises de mouvement associées, où un moyen inverseur comprend un croisement du moyen de transmission, et où un moyen doubleur comprend la première prise de mouvement présentant un diamètre double du diamètre de la deuxième prise de mouvement associée.

12. Ejecteur (1) selon l'une quelconque des revendications 9 à 11, où une prise de mouvement (PS1,PS2,PMS1,PMS2,PMI1,PMI2,PI1,PI2) comprend une roue dentée, où un moyen de transmission (TS1,TS2,TTS,TI1,TI2,TTI) comprend au moins zéro roue dentée successivement engrenée entre les deux prises de mouvement associées, où un moyen inverseur comprend un nombre impair d'engrènements entre les deux prises de mouvement associées, et où un moyen doubleur comprend un rapport de réduction de deux entre la première prise de mouvement et la deuxième prise de mouvement associées.

13. Ejecteur (1) selon l'une quelconque des revendications précédentes, où l'une au moins des prises de mouvement (PS1,PS2,PMS1,PMS2,PMI1,PMI2,PI1,PI2) est encore solidaire en rotation d'un frein (8).

14. Ejecteur (1) selon l'une quelconque des revendications précédentes, où l'une au moins des prises de mouvement (PS1,PS2,PMS1,PMS2,PMI1,PMI2,PI1,PI2) est encore solidaire en rotation d'un moyen de rappel.

15. Ejecteur (1) selon l'une quelconque des revendications précédentes, où l'une au moins des prises de mouvement (PS1,PS2,PMS1,PMS2,PMI1,PMI2,PI1,PI2) est encore solidaire en rotation d'un moteur (9).

## Patentansprüche

1. Auswerfer (1) für eine Ladung (2), der so konfiguriert ist, dass er unter einem Luftfahrzeug (3) getragen wird, umfassend ein Mittel (4) zur Führung der Ladung (2), das so konfiguriert ist, dass es zwischen dem Luftfahrzeug (3) und der Ladung (2) angeordnet wird und in der Lage ist, die Ladung (2) im Wesentlichen in einer Translationsbewegung parallel zu sich selbst zu führen, wobei das Führungsmittel (4) Folgendes umfasst:
- einen ersten oberen Lenker (BS1),
- einen ersten unteren Lenker (811),
dass der erste obere Lenker (BS1) so konfiguriert ist, dass er über eines seiner Enden an einem ersten oberen Gelenk (AS1) mit dem Luftfahrzeug (3) und über das andere seiner Enden an einem ersten mittleren Gelenk (AM1) mit einem der Enden des ersten unteren Lenkers (BI1) gelenkig verbunden ist,
wobei der erste untere Lenker (BI1) über das andere seine Enden an einem ersten unteren Gelenk (AI1) mit der Ladung (2) gelenkig verbunden ist,
die Achsen der ersten drei Gelenke (AS1, AM1, AI1) parallel sind,
- einen zweiten oberen Lenker (BS2),
- einen zweiten unteren Lenker (BI2),
wobei der zweite obere Lenker (BS2) so konfiguriert ist, dass er über eines seiner Enden an einem zweiten oberen Gelenk (AS2) mit dem Luftfahrzeug (3) und über das andere seiner Enden an einem zweiten mittleren Gelenk (AM2) mit einem der Enden des zweiten unteren Lenkers (BI2) gelenkig verbunden ist,
wobei der zweite untere Lenker (BI2) über das andere seine Enden an einem zweiten unteren Gelenk (AI2) mit der Ladung (2) gelenkig verbunden ist,
die Achsen der zweiten drei Gelenke (AS2, AM2, AI2) parallel sind,
wobei die kumulierte Länge des zweiten oberen Lenkers (BS2) und des zweiten unteren Lenkers (BI2) gleich der kumulierten Länge des ersten oberen Lenkers (BS1) und des ersten unteren Lenkers (BI1) ist, und
ein Synchronisationsmittel (5), das in der Lage ist, durch Anlegen einer ersten Verstärkung an dieses, den Winkel des ersten oberen Gelenks (AS1) auf den Winkel des ersten mittleren Gelenks (AM1) zu kopieren, das in der Lage ist, durch Anlegen einer zweiten Verstärkung an dieses, den Winkel des zweiten oberen Gelenks (AS2) auf den Winkel des zweiten mittleren Gelenks (AM2) zu kopieren und das in der Lage ist, durch Anlegen einer fünften Verstärkung an dieses, den Winkel des ersten oberen Gelenks (AS1) auf den Winkel des zweiten oberen Gelenks (AS2) zu kopieren,
**dadurch gekennzeichnet, dass** das Synchronisationsmittel (5) ferner Folgendes umfasst:
- einen ersten oberen Bewegungsnehmer (PS1), der bei dem ersten oberen Gelenk (AS1) angeordnet und gemäß dem Winkel des ersten oberen Gelenks (AS1) drehbar ist,
- einen ersten oberen mittleren Bewegungsnehmer (PMS1), der bei dem ersten mittleren Gelenk (AM1) angeordnet und gemäß dem Winkel des ersten mittleren Gelenks (AS1) drehbar und drehfest mit dem ersten unteren Lenker (BI1) verbunden ist,
- ein erstes oberes Drehübertragungsmittel (TS1) zwischen dem ersten oberen Bewegungsnehmer (PS1) und dem ersten oberen mittleren Bewegungsnehmer (PMS1), das ein Multiplizierermittel gemäß der ersten Verstärkung aufweist,
- einen zweiten oberen Bewegungsnehmer (PS2), der bei dem zweiten oberen Gelenk (AS2) angeordnet und gemäß dem Winkel des zweiten oberen Gelenks (AS2) drehbar ist,
- einen zweiten oberen mittleren Bewegungsnehmer (PMS2), der bei dem zweiten mittleren Gelenk (AM2) angeordnet und gemäß dem Winkel des zweiten mittleren Gelenks (AM2) drehbar und drehfest mit dem zweiten unteren Lenker (BI2) verbunden ist,
- ein zweites oberes Drehübertragungsmittel (TS2) zwischen dem zweiten oberen Bewegungsnehmer (PS2) und dem zweiten oberen mittleren Bewegungsnehmer (PMS2), das ein Multiplizierermittel gemäß der zweiten Verstärkung aufweist,
- ein transversales oberes Drehübertragungsmittel (TTS) zwischen dem ersten oberen Bewegungsnehmer (PS1) und dem zweiten oberen Bewegungsnehmer (PS2), das ein Multiplizierermittel gemäß der fünften Verstärkung aufweist.

2. Auswerfer (1) für eine Ladung (2), der so konfiguriert ist, dass er unter einem Luftfahrzeug (3) getragen wird, umfassend ein Mittel (4) zur Führung der Ladung (2), das so konfiguriert ist, dass es zwischen dem Luftfahrzeug (3) und der Ladung (2) angeordnet wird und in der Lage ist, die Ladung (2) im Wesentlichen in einer Translationsbewegung parallel zu sich selbst zu führen, wobei das Führungsmittel (4) Folgendes umfasst:
- einen ersten oberen Lenker (BS1),
- einen ersten unteren Lenker (BI1),
dass der erste obere Lenker (BS1) so konfiguriert ist, dass er über eines seiner Enden an einem ersten oberen Gelenk (AS1) mit dem Luftfahrzeug (3) und über das andere seiner Enden an einem ersten mittleren Gelenk (AM1) mit einem der Enden des ersten unteren Lenkers (BI1) gelenkig verbunden ist,
wobei der erste untere Lenker (BI1) über das andere seiner Enden an einem ersten unteren Gelenk (AI1) mit der Ladung (2) gelenkig verbunden ist,
die Achsen der drei ersten Gelenke (AS1, AM1, AI1) parallel sind,
- einen zweiten oberen Lenker (BS2),
- einen zweiten unteren Lenker (BI2),
wobei der zweite obere Lenker (BS2) so konfiguriert ist, dass er über eines seiner Enden an einem zweiten oberen Gelenk (AS2) mit dem Luftfahrzeug (3) und über das andere seiner Enden an einem zweiten mittleren Gelenk (AM2) mit einem der Enden des zweiten unteren Lenkers (BI2) gelenkig verbunden ist,
wobei der zweite untere Lenker (BI2) über das andere seiner Enden an einem zweiten unteren Gelenk (AI2) mit der Ladung (2) gelenkig verbunden ist,
die Achsen der drei zweiten Gelenke (AS2, AM2, AI2) parallel sind,
wobei die kumulierte Länge des zweiten oberen Lenkers (BS2) und des zweiten unteren Lenkers (BI2) gleich der kumulierten Länge des ersten oberen Lenkers (BS1) und des ersten unteren Lenkers (BI1) ist, und
ein Synchronisationsmittel (5), das in der Lage ist, durch Anlegen einer ersten Verstärkung an dieses, den Winkel des ersten oberen Gelenks (AS1) auf den Winkel des ersten mittleren Gelenks (AM1) zu kopieren, das in der Lage ist, durch Anlegen einer zweiten Verstärkung an dieses, den Winkel des zweiten oberen Gelenks (AS2) auf den Winkel des zweiten mittleren Gelenks (AM2) zu kopieren und das in der Lage ist, durch Anlegen einer fünften Verstärkung an dieses, den Winkel des ersten oberen Gelenks (AS1) auf den Winkel des zweiten oberen Gelenks (AS2) zu kopieren,
**dadurch gekennzeichnet, dass** das Synchronisationsmittel (5) ferner Folgendes umfasst:
- einen ersten unteren Bewegungsnehmer (PI1), der bei dem ersten unteren Gelenk (AI1) angeordnet und gemäß dem Winkel des ersten unteren Gelenks (AI1) drehbar ist,
- einen ersten unteren mittleren Bewegungsnehmer (PMI1), der bei dem ersten mittleren Gelenk (AM1) angeordnet und gemäß dem Winkel des ersten mittleren Gelenks (AS1) drehbar und drehfest mit dem ersten oberen Lenker (BS1) verbunden ist,
- ein erstes unteres Drehübertragungsmittel (TI1) zwischen dem ersten unteren Bewegungsnehmer (PI1) und dem ersten oberen mittleren Bewegungsnehmer (PMS1), das ein Multiplizierermittel gemäß einer dritten Verstärkung aufweist,
- einen zweiten unteren Bewegungsnehmer (PI2), der bei dem zweiten unteren Gelenk (AI2) angeordnet und gemäß dem Winkel des zweiten unteren Gelenks (AI2) drehbar ist,
- einen zweiten unteren mittleren Bewegungsnehmer (PMI2), der bei dem zweiten mittleren Gelenk (AM2) angeordnet und gemäß dem Winkel des zweiten mittleren Gelenks (AM2) drehbar und drehfest mit dem zweiten oberen Lenker (BS2) verbunden ist,
- ein zweites unteres Drehübertragungsmittel (TI2) zwischen dem zweiten unteren Bewegungsnehmer (PS2) und dem zweiten unteren mittleren Bewegungsnehmer (PME), das ein Multiplizierermittel gemäß einer Verstärkung aufweist,
- ein transversales unteres Drehübertragungsmittel (TTI) zwischen dem ersten unteren Bewegungsnehmer (PI1) und dem zweiten unteren Bewegungsnehmer (PI2), das ein Multiplizierermittel gemäß der sechsten Verstärkung aufweist,
und dass das Synchronisationsmittel (5) weiter in der Lage ist, durch Anlegen der dritten Verstärkung an dieses, den Winkel des ersten unteren Gelenks (AI1) auf den Winkel des ersten mittleren Gelenks (AM1) zu kopieren, das in der Lage ist, durch Anlegen der vierten Verstärkung an dieses, den Winkel des zweiten unteren Gelenks (AI2) auf den Winkel des zweiten mittleren Gelenks (AM2) zu kopieren und das in der Lage ist, durch Anlegen einer sechsten Verstärkung an dieses, den Winkel des ersten unteren Gelenks (AI1) auf den Winkel des zweiten unteren Gelenks (AI2) zu kopieren.

3. Auswerfer (1) nach Anspruch 2, **dadurch gekennzeichnet, dass** das Synchronisationsmittel (5) ferner Folgendes umfasst:
- einen ersten oberen Bewegungsnehmer (PS1), der bei dem ersten oberen Gelenk (AS1) angeordnet und gemäß dem Winkel des ersten oberen Gelenks (AS1) drehbar ist,
- einen ersten oberen mittleren Bewegungsnehmer (PMS1), der bei dem ersten mittleren Gelenk (AM1) angeordnet und gemäß dem Winkel des ersten mittleren Gelenks (AS1) drehbar und drehfest mit dem ersten unteren Lenker (BI1) verbunden ist,
- ein erstes oberes Drehübertragungsmittel (TS1) zwischen dem ersten oberen Bewegungsnehmer (PS1) und dem ersten oberen mittleren Bewegungsnehmer (PMS1), das ein Multiplizierermittel gemäß der ersten Verstärkung aufweist,
- einen zweiten oberen Bewegungsnehmer (PS2), der bei dem zweiten oberen Gelenk (AS2) angeordnet und gemäß dem Winkel des zweiten oberen Gelenks (AS2) drehbar ist,
- einen zweiten oberen mittleren Bewegungsnehmer (PMS2), der bei dem zweiten mittleren Gelenk (AM2) angeordnet und gemäß dem Winkel des zweiten mittleren Gelenks (AM2) drehbar und drehfest mit dem zweiten unteren Lenker (BI2) verbunden ist,
- ein zweites oberes Drehübertragungsmittel (TS2) zwischen dem zweiten oberen Bewegungsnehmer (PS2) und dem zweiten oberen mittleren Bewegungsnehmer (PMS2), das ein Multiplizierermittel gemäß der zweiten Verstärkung aufweist,
- ein transversales oberes Drehübertragungsmittel (TTS) zwischen dem ersten oberen Bewegungsnehmer (PS1) und dem zweiten oberen Bewegungsnehmer (PS2), das ein Multiplizierermittel gemäß der fünften Verstärkung aufweist.

4. Auswerfer (1) nach einem der Ansprüche 1 bis 3, wobei die Länge des ersten oberen Lenkers (BS1) gleich der Länge des zweiten oberen Lenkers (BS2) ist.

5. Auswerfer (1) nach einem der Ansprüche 1 bis 4, wobei die Länge des ersten oberen Lenkers (BS1) gleich der Länge des zweiten unteren Lenkers (BI2) ist.

6. Auswerfer (1) nach einem der Ansprüche 1 bis 5, wobei die Länge des ersten oberen Lenkers (BS1) gleich der Länge des ersten unteren Lenkers (BI1) und die Länge des zweiten oberen Lenkers (BS2) gleich der Länge des zweiten unteren Lenkers (BI2) ist.

7. Auswerfer (1) nach einem der vorstehenden Ansprüche, wobei der erste obere Bewegungsnehmer (PS1) so konfiguriert ist, dass er drehfest mit dem Luftfahrzeug (3) verbunden ist und die erste Verstärkung gleich 2 ist oder der erste obere Bewegungsnehmer (PS1) drehfest mit dem ersten oberen Lenker (BS1) verbunden ist und die erste Verstärkung gleich -2 ist,
wobei der zweite obere Bewegungsnehmer (PS2) so konfiguriert ist, dass er drehfest mit dem Luftfahrzeug (3) verbunden ist und die zweite Verstärkung gleich 2 ist oder der zweite obere Bewegungsnehmer (PS2) drehfest mit dem zweiten oberen Lenker (BS2) verbunden ist und die zweite Verstärkung gleich -2 ist,
wobei der erste untere Bewegungsnehmer (PI1) drehfest mit der Ladung (2) verbunden ist und die dritte Verstärkung gleich 2 ist oder der erste untere Bewegungsnehmer (PI1) drehfest mit dem ersten unteren Lenker (BI1) verbunden ist und die dritte Verstärkung gleich -2 ist,
wobei der zweite untere Bewegungsnehmer (PI2) drehfest mit der Ladung (2) verbunden ist und die vierte Verstärkung gleich 2 ist oder der zweite untere Bewegungsnehmer (PI2) drehfest mit dem zweiten unteren Lenker (BI2) verbunden ist und die vierte Verstärkung gleich -2 ist,
wobei ein Übertragungsmittel ein Verdopplungsmittel zum Erzeugen einer Verstärkung von 2 und ein Verdopplungsmittel und ein Invertermittel zum Erzeugen einer Verstärkung von -2 umfasst, und
wobei die fünfte Verstärkung bzw. die sechste Verstärkung gleich +/-1 ist.

8. Auswerfer (1) nach einem der vorstehenden Ansprüche, wobei mindestens ein erster Satz von Lenkern, der den ersten oberen Lenker (BS1) und den ersten unteren Lenker (BI1) umfasst, auf einer ersten Seite der Ladung (2) angeordnet ist, und mindestens ein zweiter Satz von Lenkern, der den zweiten oberen Lenker (BS1) und den zweiten unteren Lenker (BI1) umfasst, auf einer zweiten Seite der Ladung (2), im Wesentlichen gegenüber der ersten Seite, angeordnet ist.

9. Auswerfer (1) nach Anspruch 8, wobei ein erster Satz von Lenkern symmetrisch in Bezug auf einen zweiten Satz von Lenkern angeordnet ist und die fünfte Verstärkung und/oder die sechste Verstärkung gleich -1 ist.

10. Auswerfer (1) nach einem der Ansprüche 8 bis 9, wobei mindestens ein Satz von Lenkern so konfiguriert ist, dass das mittlere Gelenk (AM1, AM2) im Allgemeinen weiter von der Ladung (2) angeordnet ist als das obere Gelenk (AS1, AS2) und als das untere Gelenk (AI1, AI2), gemäß einer Richtung, die in einer horizontalen Ebene (XY) des Luftfahrzeugs (3) verläuft.

11. Auswerfer (1) nach einem der vorstehenden Ansprüche, wobei ein Bewegungsnehmer (PS1, PS2, PMS1, PMS2, PMI1, PMI2, PI1, PI2) eine an das Übertragungsmittel angepasste Riemenscheibe umfasst, wobei ein Übertragungsmittel (TS1, TS2, TTS, TI1 TI2, TTI) einen Riemen, vorzugsweise gezahnt, eine Kette oder ein Kabel umfasst, die bzw. das zwischen den beiden zugehörigen Bewegungsnehmern angeordnet ist, wobei ein Invertermittel eine Kreuzung des Übertragungsmittels umfasst und wobei ein Verdopplungsmittel den ersten Bewegungsnehmer mit einem Durchmesser umfasst, der doppelt so groß ist wie der Durchmesser des zugehörigen zweiten Bewegungsnehmers.

12. Auswerfer (1) nach einem der Ansprüche 9 bis 11, wobei ein Bewegungsnehmer (PS1, PS2, PMS1, PMS2, PMI1, PMI2, PI1, PI2) ein Zahnrad aufweist, wobei ein Übertragungsmittel (TS1, TS2, TTS, TI1, TI2, TTI) mindestens null Zahnräder aufweist, die aufeinanderfolgend zwischen den beiden zugehörigen Bewegungsnehmern in Eingriff stehen, wobei ein Invertermittel eine ungerade Anzahl von Eingriffen zwischen den beiden zugehörigen Bewegungsnehmern umfasst und wobei ein Verdopplungsmittel ein Reduktionsverhältnis von zwei zwischen dem ersten und dem zweiten zugehörigen Bewegungsnehmer umfasst.

13. Auswerfer (1) nach einem der vorstehenden Ansprüche, wobei mindestens einer der Bewegungsnehmer (PS1, PS2, PMS1, PMS2, PMI1, PMI2, PI1, PI2) weiter drehfest mit einer Bremse (8) verbunden ist.

14. Auswerfer (1) nach einem der vorstehenden Ansprüche, wobei mindestens einer der Bewegungsnehmer (PS1, PS2, PMS1, PMS2, PMI1, PMI2, PI1, PI2) weiter drehfest mit einem Rückstellmittel verbunden ist.

15. Auswerfer (1) nach einem der vorstehenden Ansprüche, wobei mindestens einer der Bewegungsnehmer (PS1, PS2, PMS1, PMS2, PMI1, PMI2, PI1, PI2) weiter drehfest mit einem Motor (9) verbunden ist.

## Claims

1. Ejector (1) for a load (2) which is configured to be carried below an aircraft (3), comprising a
means (4) for guiding the load (2) which is configured to be arranged between the aircraft (3) and the load (2), and which is capable of guiding the load (2) parallel with itself, substantially in a translational movement, the guiding means (4) comprising:
- a first upper connection rod (BS1),
- a first lower connection rod (BI1),
the first upper connection rod (BS1) being configured to be articulated to the aircraft (3) via one of the ends thereof in the region of a first upper articulation (AS1), and to one of the ends of the first lower connection rod (BI1) via the other of the ends thereof in the region of a first central articulation (AM1),
the first lower connection rod (BI1) being articulated to the load (2) via the other of the ends thereof in the region of a first lower articulation (AI1),
the axes of the first three articulations (AS1, AM1, AI1) being parallel,
- a second upper connection rod (BS2),
- a second lower connection rod (BI2),
the second upper connection rod (BS2) being configured to be articulated to the aircraft (3) via one of the ends thereof in the region of a second upper articulation (AS2), and to one of the ends of the second lower connection rod (BI2) via the other of the ends thereof in the region of a second central articulation (AM2),
the second lower connection rod (BI2) being articulated to the load (2) via one of the ends thereof in the region of a second lower articulation (AI2),
the axes of the three second articulations (AS2, AM2, AI2) being parallel,
the cumulative length of the second upper connection rod (BS2) and the second lower connection rod (BI2) being equal to the cumulative length of the first upper connection rod (BS1) and the first lower connection rod (BI1), and
- a synchronisation means (5) which is capable of copying, by applying a first gain thereto, the angle of the first upper articulation (AS1) with respect to the angle of the first central articulation (AM1), which is capable of copying, by applying a second gain thereto, the angle of the second upper articulation (AS2) with respect to the angle of the second central articulation (AM2) and which is capable of copying, by applying a fifth gain thereto, the angle of the first upper articulation (AS1) with respect to the angle of the second upper articulation (AS2),
**characterised in that** the synchronisation means (5) further comprises:
- a first upper power take-off (PS1) which is arranged in the region of the first upper articulation (AS1) and which is capable of turning in accordance with the angle of the first upper articulation (AS1),
- a first upper central power take-off (PMS1) which is arranged in the region of the first central articulation (AM1) and which is capable of turning in accordance with the angle of the first central articulation (AS1) and which is fixedly joined in terms of rotation to the first lower connection rod (BI1),
- a first upper rotary transmission means (TS1) between the first upper power take-off (PS1) and the first upper central power take-off (PMS1), comprising a means for multiplication in accordance with the first gain,
- a second upper power take-off (PS2) which is arranged in the region of the second upper articulation (AS2) and which is capable of turning in accordance with the angle of the second upper articulation (AS2),
- a second upper central power take-off (PMS2) which is arranged in the region of the second central articulation (AM2) and which is capable of turning in accordance with the angle of the second central articulation (AM2) and which is fixedly joined in terms of rotation to the second lower connection rod (BI2),
- a second upper rotary transmission means (TS2) between the second upper power take-off (PS2) and the second upper central power take-off (PMS2), comprising a means for multiplication in accordance with the second gain,
- an upper transverse rotary transmission means (TTS) between the first upper power take-off (PS1) and the second upper power take-off (PS2), comprising a means for multiplication in accordance with the fifth gain.

2. Ejector (1) for a load (2) which is configured to be carried below an aircraft (3), comprising a means (4) for guiding the load (2), configured to be arranged between the aircraft (3) and the load (2), and
which is capable of guiding the load (2) parallel with itself, substantially in a translational movement, the guiding means (4) comprising:
- a first upper connection rod (BS1),
- a first lower connection rod (BI1),
the first upper connection rod (BS1) being configured to be articulated to the aircraft (3) via one of the ends thereof in the region of a first upper articulation (AS1), and to one of the ends of the first lower connection rod (BI1) via the other of the ends thereof in the region of a first central articulation (AM1),
the first lower connection rod (BI1) being articulated to the load (2) via the other of the ends thereof in the region of a first lower articulation (AI1),
the axes of the first three articulations (AS1, AM1, AI1) being parallel,
- a second upper connection rod (BS2),
- a second lower connection rod (BI2),
the second upper connection rod (BS2) being configured to be articulated to the aircraft (3) via one of the ends thereof in the region of a second upper articulation (AS2), and to one of the ends of the second lower connection rod (BI2) via the other of the ends thereof in the region of a second central articulation (AM2),
the second lower connection rod (BI2) being articulated to the load (2) via the other of the ends thereof in the region of a second lower articulation (AI2),
the axes of the three second articulations (AS2, AM2, AI2) being parallel,
the cumulative length of the second upper connection rod (BS2) and the second lower connection rod (BI2) being equal to the cumulative length of the first upper connection rod (BS1) and the first lower connection rod (BI1), and
- a synchronisation means (5) which is capable of copying, by applying a first gain thereto, the angle of the first upper articulation (AS1) with respect to the angle of the first central articulation (AM1), which is capable of copying, by applying a second gain thereto, the angle of the second upper articulation (AS2) with respect to the angle of the second central articulation (AM2) and which is capable of copying, by applying a fifth gain thereto, the angle of the first upper articulation (AS1) with respect to the angle of the second upper articulation (AS2),
**characterised in that** the synchronisation means (5) further comprises:
- a first lower power take-off (PI1) which is arranged in the region of the first lower articulation (AI1) and which is capable of turning in accordance with the angle of the first lower articulation (AI1),
- a first lower central power take-off (PMI1) which is arranged in the region of the first central articulation (AM1) which is capable of turning in accordance with the angle of the first central articulation (AS1) and which is fixedly joined in rotation to the first upper connection rod (BS1),
- a first lower rotary transmission means (TI1) between the first lower power take-off (PI1) and the first upper central power take-off (PMS1), comprising a means for multiplication in accordance with a third gain,
- a second lower power take-off (PI2) which is arranged in the region of the second lower articulation (A12) and which is capable of turning in accordance with the angle of the second lower articulation (A12),
- a second lower central power take-off (PMI2) which is arranged in the region of the second central articulation (AM2) and which is capable of turning in accordance with the angle of the second central articulation (AM2) and which is fixedly joined in terms of rotation to the second upper connection rod (BS2),
- a second lower rotary transmission means (TI2) between the second lower power take-off (PI2) and the second lower central power take-off (PMI2), comprising a means for multiplication in accordance with a fourth gain,
- a lower transverse rotary transmission means (TTI) between the first lower power take-off (PI1) and the second lower power take-off (PI2), comprising a means for multiplication in accordance with the sixth gain,
and **in that** the synchronisation means (5) is further capable of copying, by applying the third gain thereto, the angle of the first lower articulation (AI1) with respect to the angle of the first central articulation (AM1), which is capable of copying, by applying the fourth gain thereto, the angle of the second lower articulation (AI2), with respect to the angle of the second central articulation (AM2) and which is capable of copying, by applying a sixth gain thereto, the angle of the first lower articulation (AI1) with respect to the angle of the second lower articulation (AI2).

3. Ejector (1) according to claim 2, **characterised in that** the synchronisation means (5) further comprises:
- a first upper power take-off (PS1) which is arranged in the region of the first upper articulation (AS1) and which is capable of turning in accordance with the angle of the first upper articulation (AS1),
- a first upper central power take-off (PMS1), which is arranged in the region of the first central articulation (AM1) and which is capable of turning in accordance with the angle of the first central articulation (AS1) and which is fixedly joined in terms of rotation to the first lower connection rod (BI1),
- a first upper rotary transmission means (TS1) between the first upper power take-off (PS1) and the first upper central power take-off (PMS1), comprising a means for multiplication in accordance with the first gain,
- a second upper power take-off (PS2) which is arranged in the region of the second upper articulation (AS2) and which is capable of turning in accordance with the angle of the second upper articulation (AS2),
- a second upper central power take-off (PMS2) which is arranged in the region of the second central articulation (AM2) and which is capable of turning in accordance with the angle of the second central articulation (AM2) and which is fixedly joined in terms of rotation to the second lower connection rod (BI2),
- a second upper rotary transmission means (TS2) between the second upper power take-off (PS2) and the second central power take-off (PMS2), comprising a means for multiplication in accordance with the second gain,
- an upper transverse rotary transmission means (TTS) between the first upper power take-off (PS1) and the second upper power take-off (PS2), comprising a means for multiplication in accordance with the fifth gain.

4. Ejector (1) according to any one of claims 1 to 3, wherein the length of the first upper connection rod (BS1) is equal to the length of the second upper connection rod (BS2).

5. Ejector (1) according to any one of claims 1 to 4, wherein the length of the first upper connection rod (BS1) is equal to the length of the second lower connection rod (BI2).

6. Ejector (1) according to any one of claims 1 to 5, wherein the length of the first upper connection rod (BS1) is equal to the length of the first lower connection rod (BI1) and the length of the second upper connection rod (BS2) is equal to the length of the second lower connection rod (BI2).

7. Ejector (1) according to any one of the preceding claims, wherein the first upper power take-off (PS1) is configured to be fixedly joined in terms of rotation to the aircraft (3) and the first gain is equal to 2 or the first upper power take-off (PS1) is fixedly joined in terms of rotation to the first upper connection rod (BS1) and the first gain is equal to -2,
wherein the second upper power take-off (PS2) is configured to be fixedly joined in terms of rotation to the aircraft (3) and the second gain is equal to 2 or the second upper power take-off (PS2) is fixedly joined in terms of rotation to the second upper connection rod (BS2) and the second gain is equal to -2,
wherein the first lower power take-off (PI1) is fixedly joined in terms of rotation to the load (2) and the third gain is equal to 2 or the first lower power take-off (PI1) is fixedly joined in terms of rotation to the first lower connection rod (BI1) and the third gain is equal to -2, wherein the second lower power take-off (PI2) is fixedly joined in terms of rotation to the load (2), and the fourth gain is equal to 2 or the second lower power take-off (PI2) is fixedly joined in terms of rotation to the second lower connection rod (BI2) and the fourth gain is equal to -2, wherein a transmission means comprises a doubler means in order to produce a gain of 2, and a doubler means and an inverter means in order to produce a gain of -2, and
wherein the fifth gain or the sixth gain is equal to ± 1, respectively.

8. Ejector (1) according to any one of the preceding claims, wherein at least a first assembly of connection rods comprising the first upper connection rod (BS1) and the first lower connection rod (BI1) is arranged at a first side of the load (2), and at least one second assembly of connection rods comprising the second upper connection rod (BS1) and the second lower connection rod (BI1) is arranged at a second side of the load (2), substantially opposite the first side.

9. Ejector (1) according to claim 8, wherein the first assembly of connection rods is arranged symmetrically relative to a second assembly of connection rods and the fifth gain and/or the sixth gain is/are equal to -1.

10. Ejector (1) according to either claim 8 or claim 9, wherein at least one assembly of connection rods is configured to be arranged so that the central articulation (AM1, AM2) is generally further away from the load (2) than the upper articulation (AS1, AS2) and the lower articulation (AI1, A12) in a direction within a horizontal plane (XY) of the aircraft (3).

11. Ejector (1) according to any one of the preceding claims, wherein a power take-off (PS1, PS2, PMS1, PMS2, PMI1, PMI2, PI1, PI2) comprises a pulley which is adapted to the transmission means, wherein a transmission means (TS1, TS2, TTS, TI1, TI2, TTI) comprises a belt, preferably toothed, a chain or a cable, arranged between the two associated power take-offs, wherein an inverter means comprises an intersection of the transmission means, and wherein a doubler means comprises the first power take-off which has a diameter which is double the diameter of the second associated power take-off.

12. Ejector (1) according to any one of claims 9 to 11, wherein a power take-off (PS1, PS2, PMS1, PMS2, PMI1, PMI2, PI1, PI2) comprises a toothed wheel, wherein a transmission means (TS1, TS2, TTS, TI1, TI2, TTI) comprises at least zero toothed wheel(s) which is successively engaged between the two associated power take-offs, wherein an inverter means comprises an uneven number of engagements between the two associated power take-offs, and wherein a doubler means comprises a step-down ratio of two between the associated first power take-off and second power take-off.

13. Ejector (1) according to any one of the preceding claims, wherein at least one of the power take-offs (PS1, PS2, PMS1, PMS2, PMI1, PMI2, PI1, PI2) is further fixedly joined in terms of rotation to a brake (8).

14. Ejector (1) according to any one of the preceding claims, wherein at least one of the power take-offs (PS1, PS2, PMS1, PMS2, PMI1, PMI2, PI1, PI2) is further fixedly joined in terms of rotation to a return means.

15. Ejector (1) according to any one of the preceding claims, wherein at least one of the power take-offs (PS1, PS2, PMS1, PMS2, PMI1, PMI2, PI1, PI2) is further fixedly joined in terms of rotation to a motor (9).
